# EUROPEAN PATENT SPECIFICATION

(11) **EP 1 651 877 B1**
(45) Date of publication and mention of the grant of the patent: **17.12.2008**
(21) Application number: 04749026.3
(22) Date of filing: 21.06.2004
(51) Int. Cl.: F16C 33/58, F16C 33/61

(54) **ROLLING BEARING**
WALZLAGER
ROULEMENT

(30) Priority: 23.06.2003 SE 0301845
(43) Date of publication of application: 03.05.2006
(73) Proprietor: AB Agora, S-352 31 Växjö (SE)
(72) Inventor: RISBERG, Peter, S-93047 Byske (SE)
(74) Representative: Lautmann, Kurt O
(86) International application number: PCT/SE2004/000987
(87) International publication number: WO 2004/113750

(56) References cited:
- WO-A1-00/31426

## Description

### TECHNICAL AREA

The present invention refers to rolling bearings. These are designed to connect to machine parts and provide a bearing for rotary movement of said parts. The bearings comprise a number of rolling bodies arranged to roll in a circular race around a centre of rotation for the bearing unit. Each circular race has: a) an outer main element (annular or tubular in design) with a rolling surface for the rolling bodies in the circular race (said surface being, in the main, turned towards the rotation centre), and b) a main inner element that has a rolling surface for the rolling bodies in the circular race (said surface being, in the main, turned away from the rotation centre).

### STATE OF THE TECHNOLOGY

Depending on the shape of the rolling body, rolling bearings of the above stated type (i.e. for rotating machine parts) are divided into ball bearings, roller bearings and needle bearings. Particularly the first two of these are available in a variety of sizes and designs for small and large loads as well as different types of loading. Deep groove ball bearings, angular contact bearings and spherical bearings are a few examples.

One market category of bearings is standard bearings ("catalogue bearings"). These have a cylindrical outer casing and a cylindrical hub bore. Such bearings are largely restricted to solely performing their bearing function. Furthermore, the machine parts concerned must be machined to the correct fit before they are brought into contact via the bearing's outer casing and the hub bore.

A further category of rolling bearing is one where, in addition to its bearing function, the bearing is adapted for fitting to its destined machine structure. A bearing for the front wheel of a bicycle is a typical example. A hub sleeve is one of the components of such a bearing. Each end of this sleeve has a race for the bearing's rolling bodies (ball bearings in this case). The opposing inner races are in the form of discs with a threaded hole, With the hub sleeve between them, both these discs can be threaded onto an axle (to which the wheel can be mounted). The exterior of the sleeve has flanges with holes for the wheel's spokes. This type of bearing is thus designed as a complete hub unit Along with the axle, it can be fitted into the front fork to provide a mounting unit for the spokes. Products in this category are hereinafter referred to as "special bearings". They are usually produced to be part of volume products and can be widely used in certain product branches.

Finally, one further category can be mentioned. This can be called "integrated bearings", These bearings are integrated into large complex designs in which, in addition to being part of a bearing, the machine parts are also designed for other functions. Hub units (as they are often termed in the automotive industry) for vehicle wheels are one example. Each hub unit is produced for a specific vehicle model and, in addition to the functional elements necessary for a bearing function, also have, for example, an outer hub component (to which the rim is fitted) and an inner hub component. The latter makes provision for the connection of the vehicle's suspension and its drive.

The most common feature of all the named categories of bearings is that the rolling surfaces are made as ground races that match the shape of the rolling bodies. These races have to be manufactured with great precision and high-strength steel must be used for the main components in which the races are formed. The high machining and material costs of such designs result in a relatively high price for rolling bearings produced in this way. Attempts have thus been made to form the races using other methods. One of the known methods is to line the races with thin sleeves of high-strength steel. Using this method, the entire bearing does not have to be made of such high quality material. At the same time, the quality of the thin sleeves can be made very high through compression and the selection of extremely strong materials. In patent document DE, A, 384914 (Thalheimer) it is proposed that such a lining should be formed of a spirally wound wire. The wire is there shown to be rolled flat and ground to form a surface on which the rollers in a roller bearing can run. A further proposal is known from patent document DE, A, 846646 (Franke). Here, the races are formed from circular rings of wire against which the rolling bodies, in the form of balls, rest. As the whole of the race does not need to be ground, but simply have grooves prepared for receiving the wire rings, this considerably reduces the machining of the main parts of the bearing that turn against each other. To form a surface for the rolling bodies, the wire rings can be made of compressed, high-strength steel. This, to a certain extent, compensates for the reduction in the contact area (compared with ground races) between the main components and the rolling bodies. If the standard rolling bearing with its cylindrical outer casing, cylindrical bore and ground races is regarded as a base design for a rolling bearing, it is possible, in examining what has so far been discussed, to observe certain development trends in known technology. One of these trends is represented by the special bearing and integrated bearing categories, In these, certain functions over and above that of bearing have been provided for. This is not the case with standard bearings. The second previously discussed development trend is the shaping of bearing races by methods other than grinding the rolling surfaces in the bearing's main components. This latter development is most closely linked to the streamlining of production and the reduction of production costs. It also offers the possibility of greater freedom in the choice of materials. This development trend can be relevant to standard bearings as well as special and integrated bearings.

### THE PRECEDING ISSUES HAVE BEEN SOLVED AS FOLLOWS

The solutions centre on a special design of a bearing's main elements. Even in small series, this design enables bearings to be produced in a rational and cost-efficient way while also presenting versatile possibilities for the manufacture of special bearings and integrated bearings with functions over and above the pure bearing function. Thus, machine designs that include bearings for rotary movement can be produced at a cost lower than that possible when standard bearings are used to provide the bearing function. This priort art as well as the present invention are primarily intended for use in connection with designs for light operating conditions.

### THE SOLUTION'S MOST IMPORTANT CHARACTERISTICS

In the preceding discussions, a rolling bearing has had an inner and an outer main element with rolling bodies between them. These two elements can also be designated as two co-axially arranged bodies. The characteristics of the prior art are that: at least one of these bodies is formed of a helical spring that has the character of a sleeve and is so wound that a grooved section is formed; and, that the helical spring is dimensioned to take up the forces involved in introducing rotating units into the helical spring between two of its windings.

### EXPLANATION OF THE DRAWINGS

With references being made to the attached drawings, a number of designs of the solution are explained below. In these drawings:
Fig. 1 shows a cross section of a multi-row ball bearing unit designed as per said solution,
Fig. 2 shows a cross section of another design of a multi-row bail bearing unit,
Fig. 3 shows a cross section of a multi-row ball bearing unit in a flexible format for the bearing of, for example, flexible, rotating shafts,
Fig. 4 shows a cross section of an angular contact bearing with a helical spring designed to provide a locking function, and
Fig. 5 shows a cross section of a bearing with sprung suspension.

### PREFERRED DESIGNS AS PER THE PRECEDING

The following passages identify (in the drawings) and describe the components of the machine structure that is to have a rolling bearing as per the preamble of claim 1, cf. WO-A-00/31426 (said bearing enabling rotary movement of the machine's parts). The two components of the machine structure are here termed "outer component" and "inner component". The latter can also be designated as the "shaft component".

One of these components is connected to a larger structure such as a stand, a vehicle body or similar. The other component can be designated as the "rotatable" or "swingable" component. The fixed component can be either the outer component or the inner component (the shaft component). A wheel, for example, can have an axle that rotates with the wheel, said axle rotating around a bearing in a wheel fork. The wheel fork here represents the fixed component. Alternatively, the wheel can have an outer component that is provided with a bearing against a shaft held fixed in a larger component of the machine.

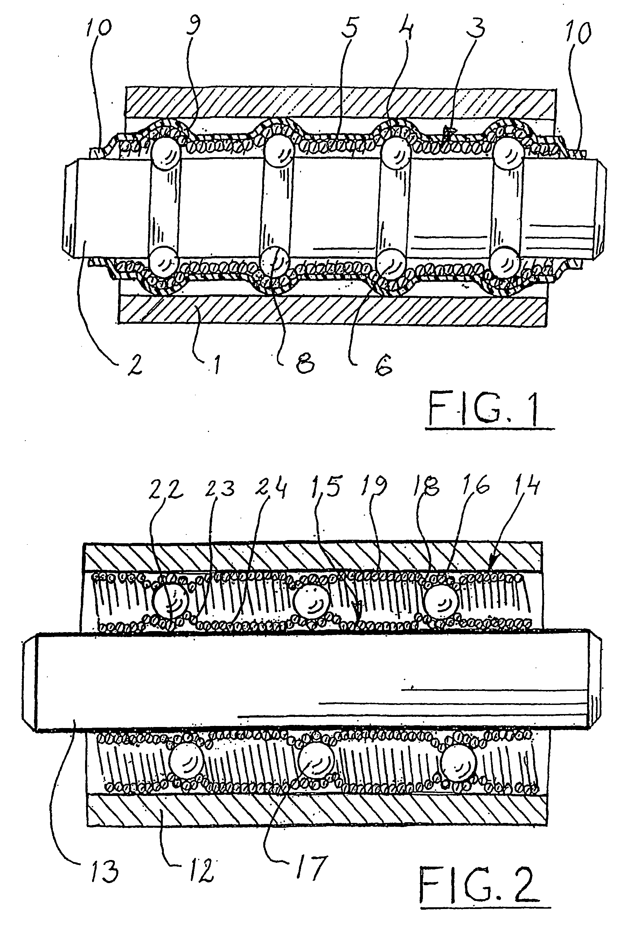

The machine structure's outer component is here shown as a sleeve (1) and its inner component as a shaft (2). The sleeve (1) can carry a wheel or other part that is to rotate, the shaft being attached to the machine at either one or both ends. Alternatively, the shaft can carry one or more rotatable elements, the sleeve (1) here being the fixed component. The bearing's outer main element is a helical spring (3) that is wound to form a number (four are shown in figure 1) of outward-curved sections (4). Between these, there are cylindrical sections (5). The outward-curved sections (4) form grooves for rolling bodies (6) arranged as a circular race. The figures here show ball bearings, but rollers can also be used. In the latter case, the outward-curved sections (4) are given flat races terminating with inward-curved wire windings that meet the cylindrical sections (5). This creates sections that hold the rollers in place.

As shown, the outer main element is a helical spring (3). This fulfils the two principal functions of providing races for the rolling bodies and, without any separate underlying support being required, forming supporting sections that are dimensioned to take up the pressure exerted by the rolling bodies. The spring fulfils yet another function, namely, via the cylindrical sections (5), forming joining and attaching sections that enable there to be several races in a single main element. Here, the diameter of the main element's windings has to be matched to the intended function of the section. Thus, the spring not only forms the main element's race, but also extends, via axially oriented windings on either or both sides of said race, to form said cylindrical sections (5). In designs such as that in figure 1, these cylindrical sections (5) join several consecutive races.

The shaft (2) is cylindrical and has grooves (8) that match the contours of the rolling bodies (6). Said grooves thus form the inner races for the circular path of the rolling bodies. Where a design uses roller bearings, the shaft can have flat-bottomed grooves (instead of the rounded grooves shown in figure 1). Here, via the groove edges, the shaft can be axially fixed in relation to the outer component (1). If no fixing is desired, the shaft used with roller bearings can be smooth. If the rollers are axially fixed by the groove edges in the shaft, then said inward-curved sections of the spring (3) can be dispensed with. Here, the outer component (1) must be fixed in a different way. However, the demonstrated axial control of rolling bodies, both in the outer component and in the inner component, should give the most usable design.

A shrink-fit tube (9) is threaded over the spring (3). As shown, the tube extends beyond the rolling bodies' outermost races. After stretching, the plastic material in such a tube retains its stretched dimensions at room temperature. It is thus possible to dimension the tube for easy threading over the spring. When heated, the tube shrinks because the material seeks to return to its "rest position". Consequently, as shown in fig. 1, the tube tightens against the spring's outer surface and follows its contours. Beyond the outermost races, the figure shows that the tube has shrunk so much that its ends (10) have tightened against the shaft (2). This forms the shaft seals that prevent dirt and moisture attaining the rolling bodies and their races. It also prevents lubricant escaping from the bearing's interior.

In producing a bearing as per the design in fig. 1, the shaft (2) and spring (3) are manufactured first. The finished rolling bodies (6) are then fitted by placing the shaft in the spring and stretching apart the outward-curved sections (4) - i.e. the places where the rolling bodies are to go - so that said bodies can be inserted, one by one, to sit in their groove (8) in the shaft (2). The races can be filled to the point where there is only a minimum of space between the rolling bodies. This dispenses with the need to have cages for the rolling bodies. Cages would be necessary if there were large gaps between the rolling bodies. Thus, even through they can have fixing edges, the races can still be given a full complement of rolling bodies and not require cages. This is not possible with bearings that have their main components constructed of homogenous rings with unbroken groove edges. After all the rolling bodies have been fitted, the shrink-fit tube (9) is threaded over the spring and exposed to the heat required to shrink it to the shape shown in figure 1. The bearing unit is then inserted in the outer component, the sleeve (1). To ensure that there is a friction fit with the tube, the sleeve is slightly "under-dimensioned". Because the tube seals the spring construction, further fixing and sealing of the bearing can be achieved by smearing sealing or bonding compound on the edges of the shrink-fit tube in the sleeve.

As shown in the following explanation of further designs, the sections stretching from the individual races can also have features for attaching the main element to the machine parts that are to be connected to each other via a bearing.

Fig. 2 shows a multi-row ball bearing. It is so designed that the spring elements, which are constructed as per the presented solution, are used to form both the inner and the outer races. The springs are here wound to form outer and inner contact surfaces for seating directly against, respectively, an outer, smooth-bored machine component and a smooth shaft. In figure 2, the machine structure's outer component (with said smooth bore) is labelled 12 and the smooth shaft 13. The outer spring is 14 and the Inner spring is 15. Spring 14 has outward-curved sections (16) that, in the previously described manner, form the race for the rolling bodies, here labelled 17. Between the outward-curved sections (16), there are the joining and attaching sections (18). The latter extend from the windings terminating the outward-curved sections (16) and form cylindrical sections (19). Thus, these sections together form a cylindrical, unbroken, outer jacket that can be introduced into the bore of the machine's outer component (12).

The inner spring (15) is of a corresponding design to the outer, but has inward-curved sections (22) that form races. From these inward-curved sections (22), there are the joining sections (23) that are also inward-curved to give inner sections (24) that together form a cylindrical inner jacket, the inner dimension of which is appropriate for the introduction of the smooth shaft (13).

Assembly is most suitably achieved by introducing the shaft (13) into the inner spring (15). The outer spring (14) is then pushed over the inner spring and the rolling bodies are inserted, as previously described, by stretching the outer spring apart. The entire unit is then introduced into the outer component's bore (12).

This design makes it possible to give the surrounding machine components a very simple form. The outer component can be quite simply manufactured from cut-to-length tube and the inner component can be a cut-to-length rod. In its simplest format, as presently described, the bearing is completely unsealed. However, it can be sealed using a shrink-fit tube as shown in fig. 1. Alternatively, either the outer component's bore or the shaft can be conventionally sealed using, for example, pull-out seals or O-rings.

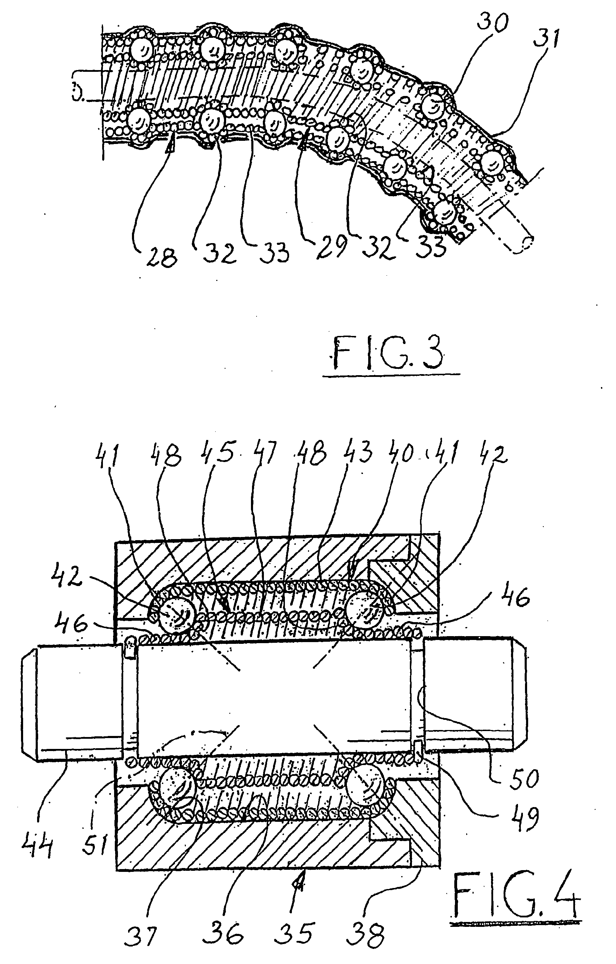

The design in fig. 3 shows how a variant largely corresponding to that in fig. 2 can be used to form a bearing for flexible, rotating shafts. Here, the outer spring (28) has largely the same construction as spring 3 in figure 1. The inner spring (29) has largely the same construction as inner spring 15 in figure 2. For both the outer and inner springs (28 and 29 respectively), the sections forming the races are labelled 32 and the joining sections 33. The rolling bodies are labelled 30.

The outer spring (28) is shown with a shrink-fit tube (31). This gives superior support to the bearing. However, the intention is that the bearing should be able to flex to match the flexing of the rotating shaft. This can be hindered if the spring has a shrink-fit tube. If, before mounting, it is possible to say how the shaft will flex at any point, then the bearing can be shaped to a corresponding form and thereafter fixed in this shape using the shrink-fit tube.

It is imaginable that this type of bearing could be used for two types of flexible shafts. In one of them, the shaft rotates to transmit power from a fixed motor to, for example, a power tool. Here, the shaft is journalled in an outer sleeve that has to be fully flexible while in active use. The bearing illustrated here could be inserted in the outer sleeve to provide a bearing either for the entire shaft or certain sections thereof. Alternatively, the bearing could be fitted to the shaft and the sleeve then attached to this. It is common for flexible shafts to be formed from tightly wound helical springs. With the present invention, the bearing's inner spring (29), which is wound to form the races, could also take the place of the power transmitting flexible shaft.

The other type of flexible shaft has a fixed mounting and is normally used for the distance-operation of some other body. At fitting, the manoeuvring shaft is given the appropriate length for the circumstances. It may be necessary to bend the shaft in certain places. At these places, the bearing pressures can be particularly high and rolling bearings are suitable for taking these up. The bearing shown in fig. 3. is excellent here. It can be produced for sale by the metre and easily cut to the length demanded by different products and installations.

Fig. 4 shows an angular contact bearing variant of the present solution. In this type of bearing, the rolling bodies function in two circular paths in races whose bearing centres are oblique to the rotating shaft. The races are also internal mirror images of each other. In a single unit, this provides a bearing that is particularly good at taking up forces that operate obliquely to the shaft.

In fig. 4, the machine structure's outer component is shown as a hub (35) with a seating (36) for the outer main element of the bearing. The seating terminates in a base section (37). At the opposite end, the seating can be closed with a cover (38). The bearing's outer main component is labelled 40 and comprises a spring whose terminating sections (41) are curved inwards. These sections are shaped to lie against a rolling body (42). The latter is here shown as a ball bearing and each terminating section covers, to all intents and purposes, one quarter of the surface of the rolling body. The rolling bodies are at approximately 45° to the centre of rotation of the machine structure's inner component, a shaft (44). Between the spring sections (41) that provide the rolling surfaces, windings of the spring extend to form joining and attaching sections (43). The seating is shaped both to support the spring (40) at both ends via, respectively, a base (37) and a lid (38), and to provide a surface for the joining and attaching sections (43).

The bearing's inner main component is formed by a spring (45) that terminates in cylindrical connecting sections (46). These are dimensioned to be threaded onto the shaft (44). An outward-curved joining section (47) stretches between the bearing sections (48) for the balls (42) at each end of the spring. The balls thus take up the stated angular contact shown by the lines of dots and dashes (51) extending from each centre of the angular contact races.

The outer cylindrical sections of the inner spring (45) terminate with the wire from which the spring is wound forming inward-curved outer sections (49). These are used to give a snap-fit in a track (50) in the shaft. Via this means, the inner spring (45) is fixed axially in relation to the shaft, which, in its turn, is fixed in relation to the outer component (35) by the outer spring's fit in the seating (36). The illustrated axial fixing via the wire's snap-fit sections (49) and the track (50) can also be used in other applications than the one shown here. The outer spring can be fixed in the same way via a snap-fit in a track in a continuous seating.

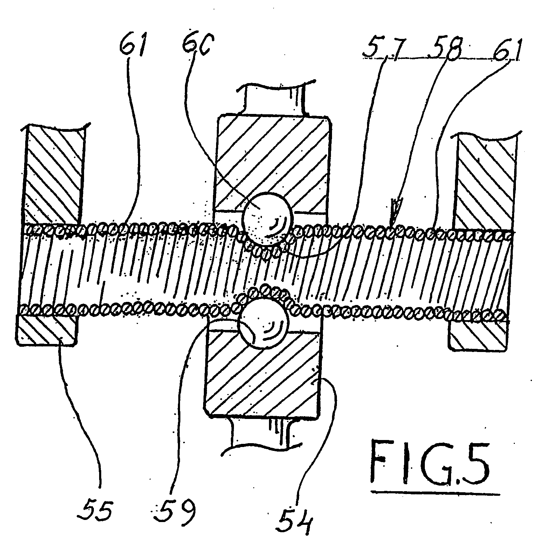

Figure 5 shows how a spring that provides a bearing race can be used for sprung suspension. It is here assumed that a wheel (54) is to be given a bearing between the two prongs of a fork (55). A very simple design of the bearing is shown - a race (57) in a spring (58) forms the inner component of the bearing. The bearing's outer main component is formed by the wheel, in which a groove (59) has been provided to form the outer race. Rolling bodies (ball bearings in this case) are fitted between the spring's race section (57) and the outer race (59). The spring's inherent resilience can be used in mounting the bearing. Extending from the inner race (57) and the balls (60), the spring extends to both sides with attaching sections (61) of a certain length. The ends of these sections are fixed in the fork (55). Fixing can be either by fitting into holes in the fork or via a retainer. A suitable alternative may be to exploit the great possibilities for designing springs with a wide range of shapes and functions. For example, snap-fit sections similar to those shown in fig. 4 could be used or the springs could have eyes at their ends. The eyes would engage with hooks (or similar) on the fork and the springs could be slightly stretched to ensure firm contact at the attachment points.

A design as per fig. 5 would thus fulfil both a bearing and a wheel suspension function via a single element, a spring (58) as per the present invention. Such a sprung suspension need not be designed for the spring to be attached at both ends. One option is to terminate the spring at one end after the race and fix this end (which has an extended section corresponding to section 61) in a stable manner in a fastening for single ended suspension. This method of achieving a bearing and a suspension function through a single element can be employed in various bearing designs such as, for example, those in figs. 1 and 2 and even with the bearing's outer main element in the form of a spring.

Spring resistance can be adjusted by changing the stiffness of the spring (i.e. adapting, length, diameter and wire thickness). Further stiffening or limitation of springiness can be achieved by inserting a dampening element or by employing a shrink-fit tube.

The illustrated and explained designs are only examples of the principle of the present solution, i.e, that a helical spring can form a race for a bearing's rolling bodies while also forming other sections for functions that are not related to the bearing function. As examples of the latter, this text has shown how a spring can be used to: join rows of races; provide attachment to and connection of the machine parts for which a bearing has been furnished; and, form a sprung suspension. In addition to this, there are many other ways in which the invention's principle can be exploited to create special rolling bearings and integrated bearing designs for all types of products. Design features other than those described in the foregoing can also be achieved using the spring principle.

The basic premise is that the races should be formed of tightly wound wire of a dimension that allows the spring to take up the forces from the rolling bodies. Other windings of the spring are possible for the joining and attaching sections. To reduce wire consumption and/or to build an axial dimensioning possibility into the spring, the joining and attaching sections can be made with widely spaced windings, Using modern winding techniques, it is also possible to give said sections a non-cylindrical shape, e.g. besides conic, even non-circular shapes (if such are appropriate for the main element's adaptation and connection to the machine parts in question).

The quality of the wire used for winding can also be exploited to optimise adaptation to differing conditions for incorporating the spring into a design. The base material used for the wire is, of course, important. For example, stainless steel could be used. In the drawing process, the hardness of the material can be influenced by the compression that arises. Hardness can also be influenced by hardening after the spring has been wound.

Regarding cylindrical rolling bodies, if it is desired that races should have larger contact surfaces than those obtained using round wire for the spring, then the wire can be ground after it has been wound to form the basic spring. It is also possible to use square or flat wire to create contact surfaces larger than those obtained using round wire.

Helical springs have the property that on twisting in one direction the dimension decreases while, on twisting in the opposite direction, it increases. This presents the possibility of holding the spring in place by twisting it one way and introducing it into an "under-dimensioned" bore or, conversely, twisting it the other way and threading it over an "over-dimensioned" journal. When the twisting ceases, the spring locks in place through expansion in the bore or contraction on the journal.

As previously mentioned, the spring's resilience can be used in assembling the bearing. One cited example is insertion of rolling bodies via the stretching apart of the spring at the races. The stretching has to be sufficient to allow the rolling bodies (usually ball bearings) to be inserted between the windings of the spring. In this way, the row of rolling bodies can be filled to the extent that no holder for spacing said bodies from each other is required. Furthermore, the properties of resilience present great possibilities for mounting the complete bearing to the machine parts in question. Examples of this have already been given (see the preceding paragraph and the locking sections in designs as per fig. 4).

Given that modern CNC technology enables extremely complex spring shapes to be wound in automatic processes, the present solution is particularly advantageous, As CNC does not require particular tools to be produced for each shape, a spring's format can be matched to current needs without large set-up costs. This makes the invention suitable even for very small series of special bearings. Common to all the designs exploiting the principle of the present invention is that they are best suited to bearings used in light operating conditions and, additionally, equipment that is used on a comparatively temporary basis.

The central idea of the present solution is thus that a helical spring, wound to a pre-determined shape, is used as one or both of the main elements of a bearing, the spring thus forming the frame and the force absorbing parts of the bearing. Said spring is also wound with sections outside the races, the winding being such that sections for functions other than the providing of races are formed. The spring is thus made as a body that integrates several functions.

### NEW SOLUTIONS IN ACCORDANCE WITH THE INVENTION

In figures 1 to 5 the rolling bearing discussed in the foregoing is a spherical body in the form of a ball bearing (60). This bearing works with a helical spring (58) formed as a sleeve made of spring wire (62). The sleeve has a circumferential groove (64). Examination of this groove shows that, in the present case, it is formed of loops of wire lying side by side. These can present an outer surface of any shape whatsoever. However, a cylindrical shape is to be preferred. As the ball (64) is spherical, the bearing contact with each part of the outer surface has a point-like character. Consequently, the loading on the ball bearing cannot be so high.

The purpose of the present invention is to increase the loading possibilities for the ball bearing. This can be done by shaping each outer surface presented by the side by side loops to give the maximum contact between the ball and the wire, In other words, *the surface in a groove interacting with the balls is spherical shaped that up to maximum possible contact is obtained between the balls' outer surface and the corresponding outer surface of the groove.*

There are several ways of achieving said shaping of the outer surface presented by the individual side by side loops in the sleeve as it sits in the circumferential groove (this shaping being aimed at maximising the contact area). The simplest method is to design a rolling bearing in the form of a ball bearing that has point-like contacts between the balls and the wire. As the bearing runs, the balls themselves work the outer surfaces of the interacting loops and thus ensure the shaping of said maximum contact area. Of course, a further result of this is that a clearance (65) arises between the balls and the contact areas of the loops. This clearance can be compensated for by replacing the used balls with others having a circumference matching that of the width of the "reshaped" groove.

Another way of compensating for this clearance is to impart a mechanical tensioning to the produced sleeve so that, as the ball bearings work the surfaces of the loops, said tensioning takes up any clearance that arises. In this way, because said tensioning of the sleeve compensates for the material loss, the original ball bearings can be retained.

A third possibility is to have a grinding process act upon the loop surfaces in the groove in such a way that the contact area is maximised.

A fourth possibility is to mechanically influence the wire even before the sleeve is made and thus ensure that the loop surfaces in the groove have the correct shape to provide the maximum contact between the loops and the ball bearings.

A fifth possibility is to compensate for the clearance during the manufacture of the ball bearing itself.

Further characteristics of the present invention are given in the following patent claims.

The present invention is described in greater detail in the examination of the final two drawings where:

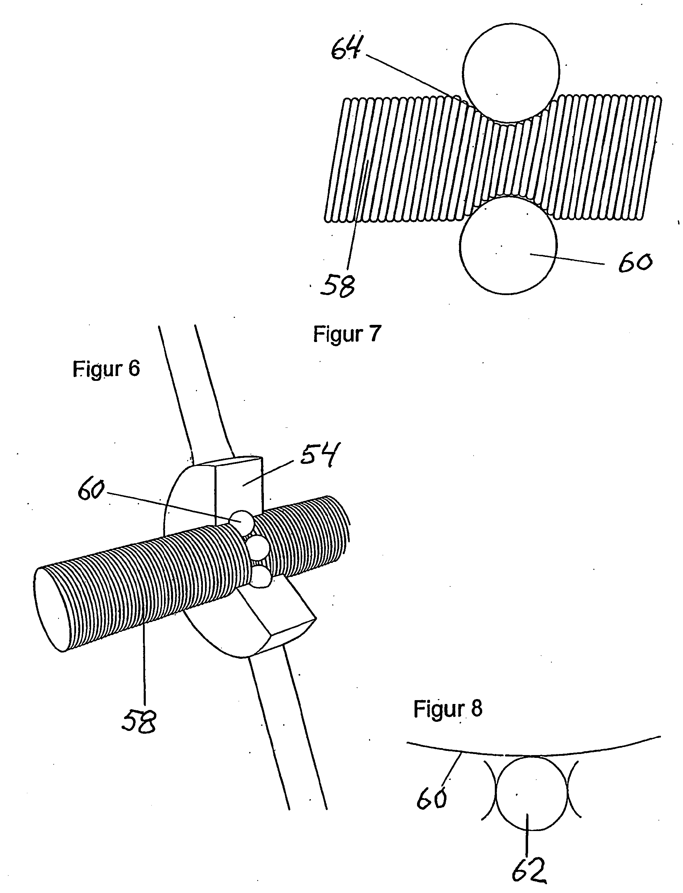

- Figure 6: shows a wheel hub corresponding to that in figure 5, where the hub is designed as per the present invention,
- Figure 7: shows the ball bearings' interaction with the point-like bearing on the loops that form the circumferential groove in which the bearings run,
- Figure 8: shows the bearing between a loop and a ball,

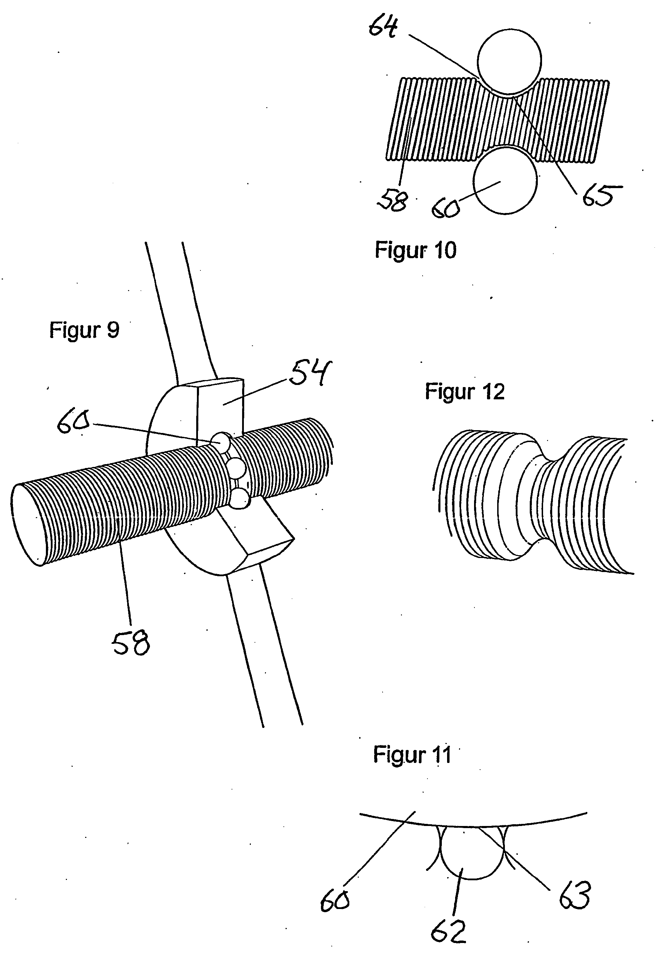

- Figure 9: shows the same image as in figure 6 with the exception that the surfaces of the individual loops have here been reshaped,
- Figure 10: shows how the reshaping was brought about by ball bearings and how a clearance has arisen,
- Figure 11: shows the contact between a ball and a loop once the sleeve surface has been reshaped, and
- Figure 12: shows the outer surface of a helical spring that has been processed to provide the maximum contact area.

Figures 6 to 8 show a wheel hub (54) that interacts with ball bearings (60) running in a groove in the wheel hub's inner circumference. The balls are in contact with a groove (64) in a sprung sleeve (58) made of spring wire (62). Under these circumstances, the balls (60) are in point contact with the outer surface of each wire (62), said surface having a cylindrical character. The ball bearing shown in figure 6 is test run, the balls (60) then immediately working on the outer surfaces of the loops in the groove (64) in such a way that each loop develops the maximum contact area with the balls. Figures 7 and 8 show the contact between the spring wire (62) and a ball (60). Figure 7 clearly shows how the balls (60) work upon the outer surfaces of the spring wire (62) in the circumferential groove (64). This working of the surface results in a clearance (65) that is clearly shown in figure 10. Figure 11 shows how the outer surface (83) of each loop of spring wire (62) has been worked upon. In the process just described, it is necessary to replace the used balls with balls having a circumference matching the diameter of the reshaped groove (84). Figure 12 shows a spring wire sleeve that has been processed to give the optimum shape to the outer surfaces of the loops in the groove.

A further way of compensating for the groove widening occasioned by the ball bearings is to pre-tension the helical spring (58) so that it continually compensates for said widening resulting from the attrition exercised by said ball bearings (60).

A third way of achieving said reshaping of the groove is to subject the loops in the groove to a grinding process that produces the desired contact between the loops and the balls.

There is also a fourth possibility. This involves acting upon the surface of the wire during its manufacture so that, when it is wound to form a sleeve that has a groove, said groove takes up the shape that gives maximum contact between the wire and the balls.

A fifth possibility is to compensate for the clearance during the manufacture of the ball bearing itself.

Where a ball bearing is formed from two tubular helical springs, each of the springs having its own circumferential groove, then the two sleeves (springs) must, in one way or another, be held together by some kind of device or arrangement.

Regard being had to the reshaping of the outer surface of the wire in a groove, it may be advantageous for the wire to be composed of a relatively soft material coated by a harder material.

Suitable alloys for both the wire and the ball bearings may vary.

It is presumably readily apparent that the wire used can have any cross section whatsoever. However, it has proved most suitable to use a wire with a circular periphery.

Ball bearings designed as per the present invention have proved especially suitable in designs where conventional ball bearings have generally not performed too well.

## Claims

1. Ball bearing comprising two co-axially arranged bodies (3, 2; 14, 15; 28, 29; 40, 45; and 54, 58), one of these being disposed outside the other, the two bodies having two opposing surfaces between which there are arranged a number of rotatable balls (6, 17, 30, 42 and 60), said opposing surfaces having grooves, the balls being retained in the grooves of the two opposing surfaces of the two bodies, at least one of these bodies formed of a helical spring that has the character of a sleeve and so wound that a grooved section (4, 16, 22, 32. 41, 48 and 57) results, the helical spring being so dimensioned that it takes up the forces exerted by the balls, the possibility being provided to subject the spring to axial forces allowing the balls to be introduced into the helical spring between two of its windings,
**characterised by** the surface in a groove that interacts with the balls being spherical shaped that up to maximum possible contact is obtained between the ball's outer surface and the corresponding outer surface of the groove.

2. Ball bearing as per patent claim 1,
**characterised by** the sleeve formed from the helical spring being given a mechanical tensioning that acts to contract the spring so that the width expansion occasioned by the surface attrition exerted by the balls is compensated for.

3. Ball bearing as per patent claim 1,
**characterised by** the groove shape being obtained by the pre-treatrment, e.g. rolling, of the wire before the manufacture of the sleeve.

4. Ball bearing as per patent claim 1,
**characterised by** a sleeve with one or more grooves being given the required starting shape by a grinding process.

5. Ball bearing as per patent claim 1.
**characterised by** the wire having different degrees of hardness inwards from the outside.

6. Ball bearing as per patent claim 1, formed by two sleeves each having its associated groove,
**characterised by** a device or arrangement that holds the two sleeves with the balls together so that a single product unit is created.

## Patentansprüche

1. **Kugellager,** umfassend zwei koaxial angeordnete Körper (3, 2; 14, 15; 28, 29; 40, 45 und 54, 58), von denen einer außerhalb des anderen angeordnet ist, wobei die beiden Körper zwei einander gegenüberliegende Flächen aufweisen, zwischen 5 denen eine Anzahl von drehbaren Kugeln (6, 17, 30, 42 und 60) angeordnet ist, wobei die einander gegenüberliegenden Flächen Nuten aufweisen, wobei die Kugeln innerhalb der Nuten der beiden einander gegenüberliegenden Flächen der zwei Körper gehalten werden, wobei mindestens einer dieser Körper aus einer Schraubenfeder gebildet ist, die die Gestalt einer Hülse hat und so gewickelt ist, 10 dass sich ein genuteter Abschnitt (4, 16, 22, 32, 41, 48 und 57) ergibt, wobei die Schraubenfeder so bemessen ist, dass sie die Kräfte, die von den Kugeln ausgeübt werden, aufnimmt, wobei die Möglichkeit gegeben ist, die Feder axialen Kräften auszusetzen, was es gestattet, dass die Kugeln in die Schraubenfeder zwischen zwei ihrer Windungen eingeführt werden, **dadurch gekennzeichnet, dass** die Fläche 15 in einer Nut, die mit den Kugeln in Wechselwirkung steht, kugelförmig ist, sodass der maximal mögliche Kontakt zwischen der Außenfläche der Einheit (Kugel) und der entsprechenden Außenfläche der Nut erzielt wird.

2. Kugellager nach Anspruch 1, **dadurch gekennzeichnet, dass** der Hülse, die aus der Schraubenfeder gebildet ist, eine mechanische Spannung erliehen wird, die so 20 wirkt, dass die Feder zusammengedrückt wird, sodass die Expansion in der Breite, die durch den Oberflächenverschleiß bewirkt wird, der durch die Kugeln hervorgerufen wird, ausgeglichen wird.

3. Kugellager nach Anspruch 1, **dadurch gekennzeichnet, dass** die Nutgestalt durch die Vorbehandlung, z.B. durch Walzen des Drahts, vor der Herstellung der Hülse 25 erhalten wird.

4. Kugellager nach Anspruch 1, **gekennzeichnet durch** eine Hülse mit mindestens einer Nut, der die erforderliche Anfangsform **durch** ein Schleifverfahren verliehen wird.

5. Kugellager nach Anspruch 1, **dadurch gekennzeichnet, dass** der Draht verschiedene Härtegrade von außen nach innen aufweist.

6. Kugellager nach Anspruch 1, das durch zwei Hülsen gebildet ist, die jeweils ihre zugehörige Nut aufweisen, **gekennzeichnet durch** eine Vorrichtung oder Anordnung, welche beide Hülsen mit den Kugeln zusammenhält, sodass eine einzige Produkteinheit geschaffen ist.

## Revendications

1. Roulement à billes comprenant deux corps agencés coaxialement (3, 2 ; 14, 15 ; 28, 29 ; 40, 45 ; et 54, 58) l'un de ceux-ci étant disposé à l'extérieur de l'autre, les deux corps ayant deux surfaces opposées entre lesquelles sont agencées un certain nombre de billes rotatives (6, 17, 30, 42 et 60), lesdites surfaces opposées ayant des gorges, les billes étant retenues dans les gorges des deux surfaces opposées des deux corps, au moins l'un de ces corps étant formé d'un ressort hélicoïdal ayant le caractère d'un manchon et enroulé de manière qu'il en résulte une section à gorge (4, 16, 22, 32, 41, 48 et 57) ; le ressort hélicoïdal étant dimensionné de manière qu'il absorbe les forces exercées par les billes, la possibilité étant offerte de soumettre le ressort à des forces axiales permettant aux billes d'être introduites dans le ressort hélicoïdal entre deux de ses enroulements, **caractérisé par** la surface dans une gorge qui interagit avec les billes étant sphériquement façonnée de façon qu'un contact maximum possible soit obtenu entre la surface extérieure de l'unité et la surface extérieure correspondante de la gorge.

2. Roulement à billes selon la revendication 1,
**caractérisé en ce que** le manchon formé à partir du ressort hélicoïdal étant donné une tension mécanique qui agit pour contracter le ressort de façon que soit compensée l'expansion en largeur occasionnée par l'attrition de la surface exercée par les billes.

3. Roulement à billes selon la revendication 1,
**caractérisé en ce que** la forme de la gorge étant obtenue par le prétraitement, par exemple le laminage, du fil avant la fabrication du manchon.

4. Roulement à billes selon la revendication 1,
**caractérisé en ce que** un manchon avec un ou plusieurs gorges étant donné la forme de départ requise au moyen d'un procédé de meulage.

5. Roulement à billes selon la revendication 1,
**caractérisé en ce que** le fil ayant différents degrés de dureté vers l'intérieur de l'extérieur.

6. Roulement à billes selon la revendication 1, formé par deux manchons chacun ayant sa gorge associée,
**caractérisé par** un dispositif ou agencement qui maintient ensemble les deux manchons avec les billes de manière à créer une seule unité de produit.
